# EUROPEAN PATENT APPLICATION

(11) **EP 3 505 902 A1**
(43) Date of publication of application: **03.07.2019**
(21) Application number: 17846957.3
(22) Date of filing: 29.08.2017
(51) Int. Cl.: G01M 15/12, G01M 7/02, G01M 15/14, G01D 21/02, G01H 1/00

(54) **ONLINE DIAGNOSTIC/PROGNOSTIC SYSTEM FOR ROTATION DEVICE**

(30) Priority: 29.08.2016 KR 20160110312
(71) Applicant: Korea Hydro & Nuclear Power Co., Ltd, Gyeongju-si, Gyeongsangbuk-do 38120 (KR)
(72) Inventor: KIM, Yang Seok, Daejeon 34053 (KR); KIM, Dae Woong, Sejong 30130 (KR); KIM, Bum Nyun, Gyeongju-si Gyeongsangbuk-do 38097 (KR); KIM, Ji In, Seoul 05069 (KR); CHOI, Nam Woo, Seongnam-si Gyeonggi-do 13612 (KR); SHIN, Jae Hun, Gyeongju-si Gyeongsangbuk-do 38081 (KR); PARK, Young Sheop, Sejong 30064 (KR); PARK, Chi Yong, Daejeon 35217 (KR); KIM, Jong Seog, Daejeon 34023 (KR); KIM, Hyoung Kyun, Daejeon 34101 (KR); LEE, Byoung Oh, Daejeon 34075 (KR); CHANG, Hee Seung, Daejeon 34087 (KR); SHIN, You Soo, Gyeongju-si Gyeongsangbuk-do 38081 (KR)
(74) Representative: Habermann, Hruschka & Schnabel
(86) International application number: PCT/KR2017/009418
(87) International publication number: WO 2018/044032

(57) **Abstract**

The present invention provides an online diagnostic/prognostic system, for a rotation device, which does not require a diagnostic apparatus to be transferred and enables easy transmission of waveform data to a remote site. To this end, the present invention comprises: a vibration sensor mounted on a rotation device; a data analyzing unit connected to the vibration sensor and for extracting valid data, which is required for the diagnosis of the rotation device, from data obtained from the vibration sensor; and a diagnostic/prognostic server for diagnosing for abnormalities in the rotation device by means of comparing the valid data and prestored data. Therefore, the present invention does not require an apparatus for measuring vibrations to be transferred and enables transmission of waveform data to a remote cite, thereby enabling more efficient diagnosis for a rotation device and preventing abnormalities in the rotation device.

## Description

### [Technical Field]

The present invention relates to an online diagnostic/prognostic system for a rotation device and, more particularly, to an online diagnostic/prognostic system for a rotation device for diagnosing a rotation device provided in a power plant.

### [Background Art]

Generally, in the power plant, a rotation device such as a turbine, a water supply pump, and the like is provided. In the rotation device, a monitoring system for safe operation of a power plant may be provided. The monitoring system monitors various types of variables including an axial vibration of a rotation device in real time, and generates a warning or stops generation when an abnormal situation occurs.

However, since a plant shutdown is critical in a power plant operation, a diagnosing function may be included in a monitoring system. However, since the diagnosing function is limited in the conventional monitoring system in which the diagnosing function is included, detailed vibration analysis is separately performed. Since waveform data is required for such a vibration analysis, a separate vibration measurement device is installed in a rotation device, and waveform data is extracted. In addition, by analyzing the extracted data, whether there is abnormality of the rotation device is determined.

Since waveform data is extracted by transferring a vibration measurement device to a rotation device in the conventional rotation device examination using the vibration analysis, there is a problem that examination efficiency is degraded. In addition, since the data size of the waveform data is great, there is a problem that it is difficult to transmit the data to a remote location in online or apply a wireless communication technique for improving diagnostic efficiency.

### [Disclosure]

### [Technical Problem]

An object of the present invention is to provide an online diagnostic/prognostic system for a rotation device that does require transfer of a device for measuring vibration.

In addition, another object of the present invention is to provide an online diagnostic/prognostic system for a rotation device in which transfer of vibration waveform data to a remote location is easy.

### [Technical Solution]

An online diagnostic/prognostic system for a rotation device according to the present invention comprises a vibration sensor mounted on the rotation device, a data analyzing unit connected to the vibration sensor and for extracting valid data, which is required for the diagnosing the rotation device, from data obtained from the vibration sensor and a diagnostic/prognostic server for diagnosing for abnormality in the rotation device by comparing the valid data and data stored in advance, and predicting future progress of the abnormality in real time.

The online diagnostic/prognostic system for a rotation device may further comprise a data server interlinked with the data analyzing unit and for storing the valid data temporarily, and transmitting the valid data to the diagnostic/prognostic server.

The data analyzing unit may further comprise: a preprocessing unit for converting the signal provided from the vibration sensor to a digital signal, and generating asynchronous waveform data and a diagnosing variable generation unit for generating waveform data by sampling acceleration and displacement signal comprised in static data of the rotation device and the digital signal.

The data analyzing unit may further comprise a data communication unit for transmitting the asynchronous waveform data, the static data and the waveform data to the data server, and the data communication unit transmits the data periodically.

The data analyzing unit may further comprise an event processing unit for generating an event signal such as warning or speed variation information of the rotation device based on the waveform data, and a self diagnosing unit for diagnosing a state of the data analyzing unit.

The data server may divide the valid data such that the divided valid data is provided to the diagnostic/prognostic server in online.

The data server may provide the divided valid data to the diagnostic/prognostic server with a predetermined interval such that network load is adjusted.

The vibration sensor and the data analyzing unit may be integrally provided and construct a measurement/analysis unit.

The measurement/analysis unit may be installed in each of a plurality of rotation devices, and the plurality of measurement/analysis units may be interlinked with a single data server.

The vibration sensor may comprise a displacement sensor for measuring vibration displacement of an axial provided in the rotation device and an acceleration sensor installed on a body of the rotation device.

### [Advantageous Effects]

According to an online diagnostic/prognostic system for a rotation device according to the present invention, it is not required to transfer a device for measuring vibration, and it is available to transfer waveform data to a remote location, and an occurrence of abnormality in the rotation device may be prevented in advance as well as an examination efficiency of the rotation device is improved.

The technical effects in the present invention are not limited to the above-described technical effects and other technical effects which are not described herein will become apparent to those skilled in the art from the following description.

### [Description of Drawings]

FIG. 1 is a block diagram illustrating an online diagnostic/prognostic system for a rotation device according to an embodiment;
FIG. 2 is a block diagram illustrating a data analyzing unit of an online diagnostic/prognostic system for a rotation device according to an embodiment;
FIG. 3 is a block diagram illustrating a data server of an online diagnostic/prognostic system for a rotation device according to an embodiment;
FIG. 4 is a block diagram illustrating a diagnostic/prognostic server of an online diagnostic/prognostic system for a rotation device according to an embodiment; and
FIG. 5 is a block diagram illustrating an online diagnostic/prognostic system for a rotation device according to another embodiment.

### [Mode for Invention]

Hereinafter, embodiments of the present invention are described in detail with reference to accompanying drawings. However, the embodiments are not limited to the embodiment described below, but may be implemented in various forms, and the embodiments are provided to inform the scope of the invention perfectly to those ordinary skilled in the art by perfecting the description of the present invention. Some parts of a shape or the like of an element in the drawing may be exaggerated for clear description, and an element denoted by the same reference numeral means the same element.

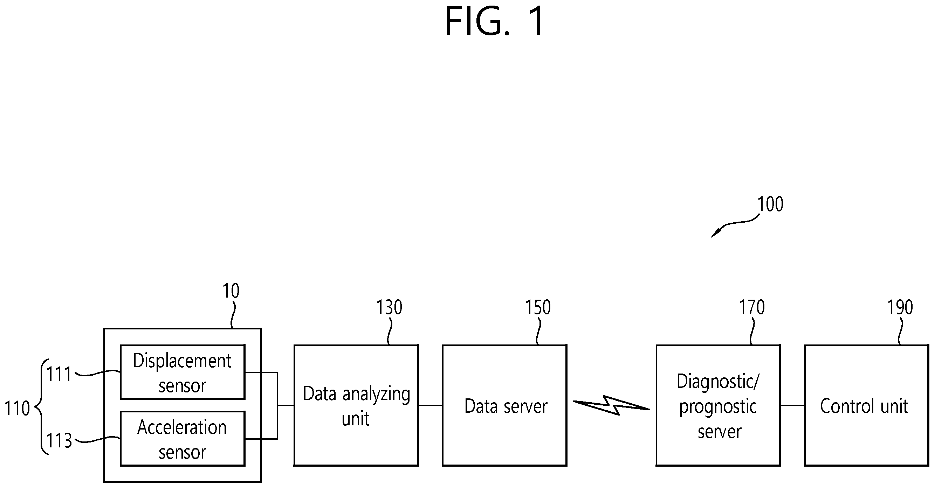

FIG. 1 is a block diagram illustrating an online diagnostic/prognostic system for a rotation device according to an embodiment.

As shown in FIG. 1, a diagnostic system 100 according to the embodiment may include a vibration sensor 110, a data analyzing unit 130, a data server 150, a diagnostic/prognostic server 170 and a control unit 190.

First, the vibration sensor 110 is installed in a rotation device 10 and measures a vibration signal of the rotation device 10. Here, the rotation device 10 may be various rotation devices such as a turbine for power generation, a turbine for driving, a centrifugal pump, a blower fan, a cooling fan, and the like, and the types of the rotation device 10 are not limited herein.

Meanwhile, the vibration sensor 110 may include a displacement sensor 111 and an acceleration sensor 113 for measuring a vibration signal of the rotation device 10. The displacement sensor 111 is installed so as to measure an axial displacement of the rotation device. In addition, the acceleration sensor 113 may be installed on a body of the rotation device 10, for example, a bearing housing.

The data analyzing unit 130 analyzes the vibration signal provided from the vibration sensor 110 such that data required for diagnosis is provided to the data server 150. That is, the data analyzing unit 130 may obtain and process data from the vibration sensor 110 and extract data required for prognostic diagnosis selectively and transmit it.

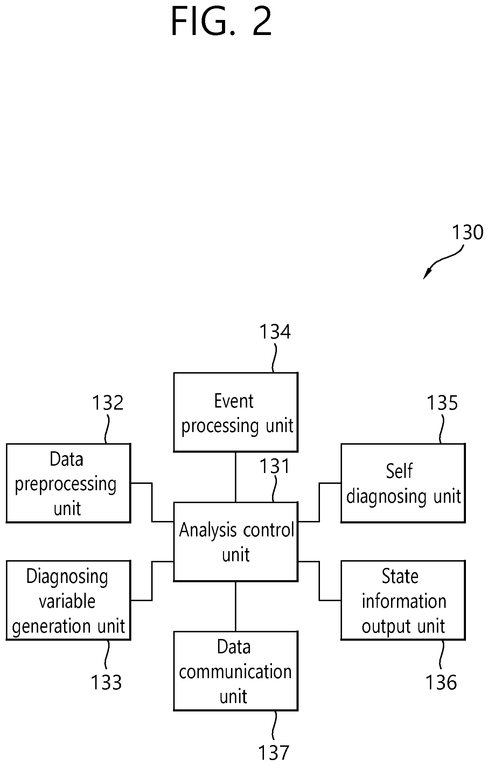

FIG. 2 is a block diagram illustrating a data analyzing unit of an online diagnostic/prognostic system for a rotation device according to an embodiment.

As shown in FIG. 2, the data analyzing unit 130 according to the embodiment converts an analogue vibration signal provided from the vibration sensor 110 to a digital vibration signal and extracts valid data required for diagnosing the rotation device 10 from the digital vibration signal.

The data analyzing unit 130 may include an analysis control unit 131, a data preprocessing unit 132, a diagnosing variable generation unit 133, an event processing unit 134, a self diagnosing unit 135, a state information output unit 136 and a data communication unit 137.

First, the analysis control unit 131 performs general control of the data analyzing unit 130. For example, the analysis control unit 131 may perform configuration information management, data transmission and reception, generated data management, and the like.

In addition, the data preprocessing unit 132 converts the analogue vibration signal provided from the vibration sensor 110 to a digital vibration signal. Further, the data preprocessing unit 132 may perform preprocessing function such as generating asynchronous waveform data, identifying rotation start position of the rotation device 10, and so on.

The diagnosing variable generation unit 133 generates synchronous waveform data by sampling the digital vibration signal generated in the data preprocessing unit 132, for example, the acceleration and the displacement signal. In addition, the diagnosing variable generation unit 133 enables the generated waveform data to be provided to the data communication unit 137. Further, the diagnosing variable generation unit 133 may generate static data required for diagnosing the rotation device 10 such as amplitude and phase up to multiple of 1 to 5 of rotation frequency, and DC mean value.

The event processing unit 134 generates an event signal such as warning or speed variation information when the waveform data passes a preconfigured warning range or rotation speed variation and the like is in transient state based on the waveform data generated in the diagnosing variable generation unit 133. And, the event processing unit 134 enables the generated event signal to be provided to the data communication unit 137.

The self diagnosing unit 135 diagnoses a collected signal abnormality, communication status, computation load of a system, a memory state, and so on, such that the self diagnosing signal is output to the state information output unit 136. In addition, the self diagnosing unit 135 enables the generated self diagnosing signal to be provided to the data communication unit 137.

The data communication unit 137 provides the waveform data generated in the diagnosing variable generation unit, the event signal generated in the event processing unit 134 and the self diagnosing signal generated in the self diagnosing unit 135 to the data server 150 through Ethernet. Here, the data communication unit 137 may provide the data generated in the data analyzing unit 130 to the data server 150 with a predetermined interval, for example, 1 second, 5 seconds, 10 seconds, and the like.

Such a data analyzing unit 130 may be provided so as to collect vibration signals up to maximum 20 channels, and an operating system such as Linux is mounted such that data collection and process may be performed automatically.

Meanwhile, referring to FIG. 1 again, the data server 150 may provide the data transmitted from the data analyzing unit 130 in real time to the diagnostic/prognostic server 170, and store it during a predetermined period. The data server 150 may include the function of system state check and recovery of the corresponding server, access management, database management, data transmission and reception, data validity, and the like.

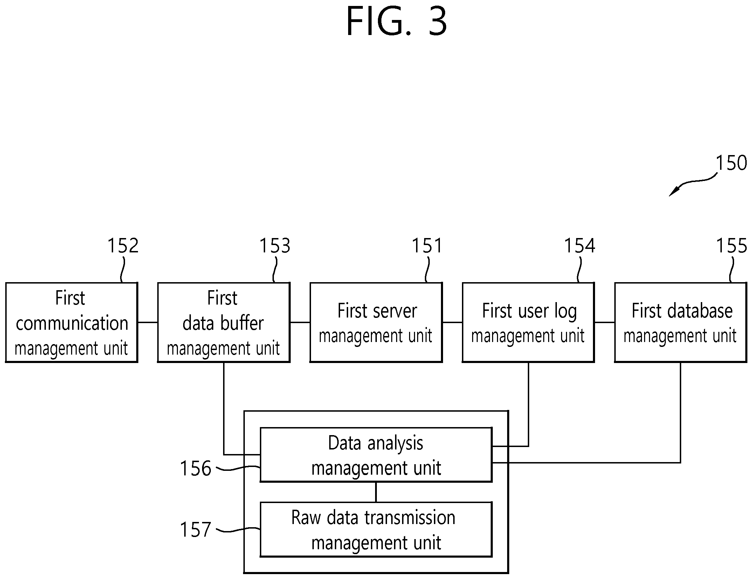

FIG. 3 is a block diagram illustrating a data server of an online diagnostic/prognostic system for a rotation device according to an embodiment.

As shown in FIG. 3, the data server 150 according to the embodiment may include a first server management unit 151, a first communication management unit 152, a first data buffer management unit 153, a first user log management unit 154, a first database management unit 155, a data analysis management unit 156 and a raw data transmission management unit 157.

The first server management unit 151 performs general management of the data server 150. And, the first communication management unit 152 receives data provided from the data analyzing unit 130 and provides the data processed in the data server 150 to the diagnostic/prognostic server 170. The first data buffer management unit 153 performs a temporary storage of data, and the first user log management unit 154 manages a worker log accessing to the data server 150.

Further, the data analysis management unit 156 processes periodic data and state data, event data, and the like, transmitted from the data analyzing unit 130 and stores it in the first database management unit 155. Here, the data analysis management unit 156 enables the data provided from the data analyzing unit 130 which is provided a singular or multiple numbers to be stored in the first database management unit 155 without loss.

In the case that vast amounts of asynchronous and synchronous waveform data which is periodically transmitted is transmitted to the diagnostic/prognostic server 170 in real time, network load is caused, which may cause a network failure, and accordingly, the raw data transmission management unit 157 performs the function of transmitting data divisionally while minimizing network bandwidth use amount.

That is, the data server 150 receives data from the data analyzing unit 130 and stores it in the first database management unit 155 during a predetermined period, and provides the data to the diagnostic/prognostic server 170 disposed in a remote location through the first communication management unit 152. Here, the data required for a prediction diagnosis is divisionally transmitted with an interval, for example, 1 second, 5 seconds, 10 seconds, and the like, and the vibration waveform data required for detailed analysis by a user is transmitted by determining a transmission period or a time according to a network situation. Consequently, a network load may be controlled.

Meanwhile, referring to FIG. 1, the diagnostic/prognostic server 170 diagnoses an abnormality of the rotation device 10 by using data forwarded from the data server 150 in real time and a steady state data which is stored in advance, and predicts future progress in real time.

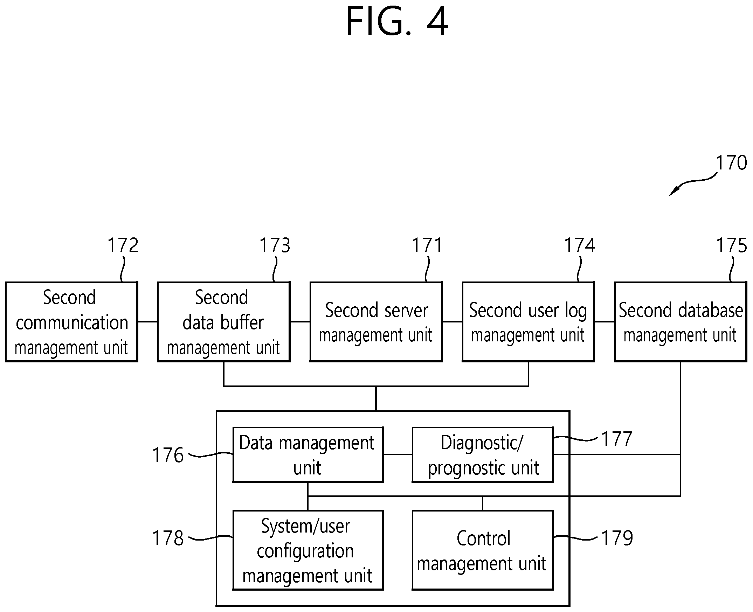

FIG. 4 is a block diagram illustrating a diagnostic/prognostic server of an online diagnostic/prognostic system for a rotation device according to an embodiment.

As shown in FIG. 4, the diagnostic/prognostic server 170 according to the embodiment may include a second server management unit 171, a second communication management unit 172, a second data buffer management unit 173, a second user log management unit 174, a second database management unit 175, a data management unit 176, a diagnostic/prognostic unit 177, a system/user configuration management unit 178 and a control management unit 179.

The second server management unit 171 performs general management of the diagnostic/prognostic server 170. And, the second communication management unit 172 receives data provided from the data server 150 and provides the data processed in the diagnostic/prognostic server 170 to the control unit 190. The second data buffer management unit 173 performs a temporary storage of data, and the second user log management unit 174 manages a worker log accessing to the diagnostic/prognostic server 170.

The data management unit 176 manages input data required in the diagnostic/prognostic unit 177. And, since the data transmitted from the data server may be transmitted asynchronously, the data management unit 176 includes data time synchronizing function that groups and adjusts data collection times of all input variables for each time slot.

The diagnostic/prognostic unit 177 generates abnormal state of the rotation device and future progress information of the abnormal state, for example, a change of rotation device bearing trajectory depending on time based on the data provided from the data management unit 176, and stores it in the second database management unit 175.

The system/user configuration management unit 178 manages a user access and authentication. And, the system/user configuration management unit 178 performs the function of adding, modifying and deleting data related to system configuration in the second database management unit 175.

In addition, the control management unit 179 provides the data generated in the diagnostic/prognostic server 170 to the control unit 190 using a network communication.

Referring to FIG. 1 again, the control unit 190 may be provided in a computer, and possessed by a worker that diagnoses the rotation device 10. Here, the control unit 190 may have an interface that enables to output data required in the diagnostic system 100 and input a signal required for driving the diagnostic system 100.

Meanwhile, hereinafter, an online diagnostic/prognostic system for a rotation device according to another embodiment will be described in detail. However, detailed description for the elements described above is omitted but described with the same reference numerals.

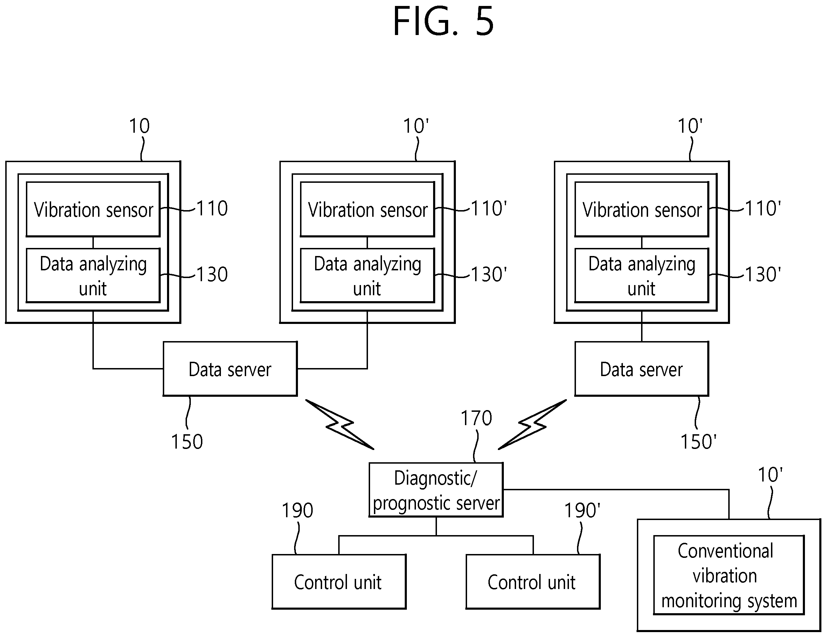

FIG. 5 is a block diagram illustrating an online diagnostic/prognostic system for a rotation device according to another embodiment.

As shown in FIG. 5, the diagnostic system 100 according to another embodiment provides the vibration sensor 110 and the data analyzing unit 130 as being integrated such that installation and maintenance may become simplified.

In addition, the measurement/analysis unit in which the vibration sensor 110 and the data analyzing unit 130 are integrated is installed in each of a plurality of rotation devices, and connected to a single data server 150. Here, depending on the processing capacity of the data server 150 and the network load, the data server 150 and network bandwidth may be added and extended.

Further, the diagnostic/prognostic server 170 installed in a remote location from the rotation device 10 may interlink between a plurality of data servers 150 and 150' and a plurality of control units 190. In addition, considering extendibility, the diagnostic/prognostic server 170 may construct the second database management unit 175 and the diagnostic/prognostic unit 177 in separate servers, and divide each processing process so as to distribute load. Consequently, a system in which extendibility convenience is improved may be designed while process performance is guaranteed.

In addition, in the case that the conventional vibration monitoring system is already installed in the rotation device 10, a vibration signal may be directly received from the vibration monitoring system to the diagnostic/prognostic unit 177.

As such, according to an online diagnostic/prognostic system for a rotation device according to the embodiment, it is not required to transfer a device for measuring vibration, and it is available to transfer waveform data to a remote location, and an occurrence of abnormality in the rotation device may be prevented in advance as well as an examination efficiency of the rotation device is improved.

An embodiment of the present invention described above and depicted in the drawing should not be interpreted to limit the technical concept of the present invention. The scope of the present invention is limited only by the features defined in the claims, and those skilled in the art may improve or modify the technical concept of the present invention in various forms. Accordingly, the improvement and modification belongs to the scope of the present invention so long as the improvement and modification are obvious to those skilled in the art.

## Claims

1. An online diagnostic/prognostic system for a rotation device, comprising:
a vibration sensor mounted on the rotation device;
a data analyzing unit connected to the vibration sensor and for extracting valid data, which is required for the diagnosing the rotation device, from data obtained from the vibration sensor; and
a diagnostic/prognostic server for diagnosing for abnormality in the rotation device by comparing the valid data and data stored in advance, and predicting future progress of the abnormality in real time.

2. The online diagnostic/prognostic system for a rotation device of claim 1, further comprising a data server interlinked with the data analyzing unit and for storing the valid data temporarily, and transmitting the valid data to the diagnostic/prognostic server.

3. The online diagnostic/prognostic system for a rotation device of claim 2, wherein the data analyzing unit comprises:
a preprocessing unit for converting the signal provided from the vibration sensor to a digital signal, and generating asynchronous waveform data; and
a diagnosing variable generation unit for generating waveform data by sampling acceleration and displacement signal comprised in static data of the rotation device and the digital signal.

4. The online diagnostic/prognostic system for a rotation device of claim 3, wherein the data analyzing unit further comprises a data communication unit for transmitting the asynchronous waveform data, the static data and the waveform data to the data server, and
wherein the data communication unit transmits the data periodically.

5. The online diagnostic/prognostic system for a rotation device of claim 3, wherein the data analyzing unit further comprises:
an event processing unit for generating an event signal such as warning or speed variation information of the rotation device based on the waveform data, and
a self diagnosing unit for diagnosing a state of the data analyzing unit.

6. The online diagnostic/prognostic system for a rotation device of claim 2, wherein the data server divides the valid data such that the divided valid data is provided to the diagnostic/prognostic server in online.

7. The online diagnostic/prognostic system for a rotation device of claim 6, wherein the data server provides the divided valid data to the diagnostic/prognostic server with a predetermined interval such that network load is adjusted.

8. The online diagnostic/prognostic system for a rotation device of claim 1, wherein the vibration sensor and the data analyzing unit are integrally provided and construct a measurement/analysis unit.

9. The online diagnostic/prognostic system for a rotation device of claim 8, wherein the measurement/analysis unit is installed in each of a plurality of rotation devices, and
wherein the plurality of measurement/analysis units is interlinked with a single data server.

10. The online diagnostic/prognostic system for a rotation device of claim 1, wherein the vibration sensor comprises:
a displacement sensor for measuring vibration displacement of an axial provided in the rotation device; and
an acceleration sensor installed on a body of the rotation device.
